# EUROPEAN PATENT APPLICATION

(11) **EP 4 746 005 A1**
(43) Date of publication of application: **20.05.2026**
(21) Application number: 24839570.9
(22) Date of filing: 01.07.2024
(51) Int. Cl.: H01F 7/06, F16K 31/06, H01F 7/128

(54) **SOLENOID**

(30) Priority: 11.07.2023 JP 2023113795
(71) Applicant: Eagle Industry Co., Ltd., Minato-ku Tokyo 105-8587 (JP)
(72) Inventor: MORITA, Kakeru, Tokyo 105-8587 (JP); FUKUNAGA, Shuji, Tokyo 105-8587 (JP); HIROTA, Koji, Tokyo 105-8587 (JP); KAMEI, Yohei, Tokyo 105-8587 (JP); IWANAGA, Hiroyuki, Tokyo 105-8587 (JP)
(74) Representative: Patentquadrat Patentanwaltsgesellschaft mbH
(86) International application number: PCT/JP2024/023764
(87) International publication number: WO 2025/013678

(57) **Abstract**

A solenoid with high heat dissipation properties is provided. In a solenoid 1 including a cylindrical case 30 and a coil 39 disposed inside the case 30 and having an outer periphery portion covered by a resin molded portion 35, at least a part of an outer peripheral surface of the resin molded portion 35 is formed in an uneven shape having at least one convex portion.

## Description

### {TECHNICAL FIELD}

The present invention relates to a solenoid, for example, a solenoid that drives a movable core by magnetic action when a current is passed through a coil.

### {BACKGROUND ART}

Solenoids are used in a variety of industrial fields as means of operating various devices such as valves and machines. The solenoid is configured to operate various devices by electromagnetically moving a movable core housed in a reciprocating manner when a current is passed through a coil.

Generally, the solenoid includes a solenoid case made of a magnetic material, a coil housed inside the solenoid case, a fixed core, and a movable core, and moves the movable core toward the fixed core by generating a magnetic force between the fixed core and the movable core when a current is passed through the coil, and a rod that comes into contact with or is connected to various devices is disposed on one axial end side of the movable core.

For example, in the solenoid shown in Patent Citation 1, the coil is molded with resin to protect the coil. The coil is inserted into the solenoid case, and a plate, a plunger, and a fixed core are disposed inside the coil. When a current is passed through the coil, a magnetic circuit is formed that passes through the fixed core, the case, the plate, and the plunger and then back to the fixed core, so that the plunger is magnetically attracted to the fixed core.

### {CITATION LIST}

### {Patent Literature}

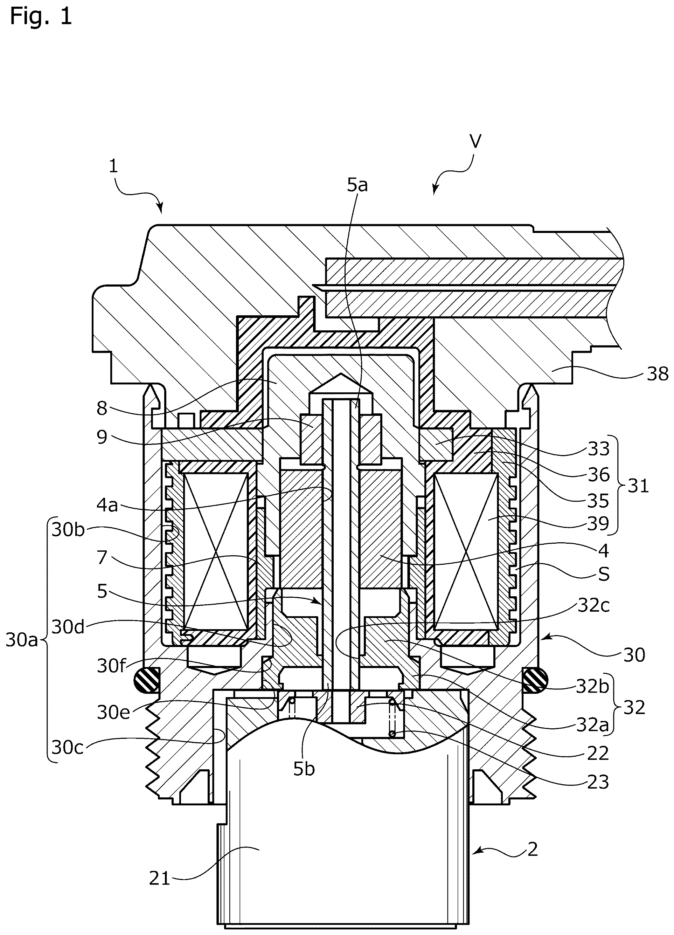

Patent Citation 1: International Publication No. 2003/056579 (page 6, FIG. 1)

### {SUMMARY OF INVENTION}

### {Technical Problem}

In the solenoid such as that described in Patent Citation 1, since the coil is covered with resin, the coil can be suppressed from being affected by external factors. However, since heat generated during energization tends to build up and the resistance of the coil increases as its temperature increases, there is a risk that the thrust of the movable core will decrease.

The present invention has been made in consideration of such problems, and has an object to provide a solenoid with high heat dissipation properties.

### {Solution to Problem}

In order to solve the above-described problems, a solenoid according to the present invention is a solenoid including: a case formed in a cylindrical shape; and a coil disposed inside the case and has an outer periphery portion covered by a resin molded portion, wherein at least a part of an outer peripheral surface of the resin molded portion is formed in an uneven shape having at least one convex portion. According to the aforesaid feature of the present invention, the uneven shape increases the surface area of the outer peripheral surface of the resin molded portion, and a convection current is caused between the case and the outer peripheral surface of the resin molded portion, so that heat is easily transferred to the case and the heat dissipation properties are improved.

It may be preferable that the convex portion extends in a circumferential direction. According to this preferable configuration, heat can be dissipated over a wide range in the circumferential direction.

It may be preferable that the convex portion extends over an entire circumference. According to this preferable configuration, heat can be dissipated in a balanced manner in the circumferential direction.

It may be preferable that a plurality of the convex portions are provided in an axial direction. According to this preferable configuration, heat can be dissipated in a balanced manner in the axial direction.

It may be preferable that the convex portion extends in an axial direction. According to this preferable configuration, the convex portion is unlikely to interfere with the case when inserting the coil into the case, and the assembly becomes easy. Further, heat can be dissipated in a wide range in the axial direction.

It may be preferable that a plurality of the convex portions are provided in a circumferential direction. According to this preferable configuration, heat can be dissipated in a balanced manner in the circumferential direction.

It may be preferable that the convex portion is radially away from the case. According to this preferable configuration, since a convection current is also caused in the fluid between the convex portion and the case, heat dissipation from the coil is promoted.

It may be preferable that the convex portion is brought into contact with the case. According to this preferable configuration, since the case and the convex portion are in contact with each other, heat dissipation from the coil is promoted and the position of the coil is stable.

It may be preferable that the uneven shape of the outer peripheral surface of the resin molded portion extends in a spiral shape, and an inner peripheral surface of the case has an uneven shape which is engageable with the uneven shape of the outer peripheral surface of the resin molded portion. According to this preferable configuration, heat dissipation from the coil is promoted and the coil and the case can be positioned by screwing the uneven shape of the resin molded portion into the uneven shape of the case.

It may be preferable that the uneven shape is composed of concave shapes and convex shapes alternatively arranged and each having a rectangular cross-section. According to this preferable configuration, the strength of the convex portion can be ensured and the surface area can be efficiently increased.

### {BRIEF DESCRIPTION OF DRAWINGS}

FIG. 1 is a partially cross-sectional view of a solenoid according to a first embodiment of the present invention.
FIG. 2 is a perspective view illustrating a solenoid molded body in the first embodiment.
FIG. 3 is a schematic view illustrating a convex portion of the solenoid molded body in the first embodiment.
FIG. 4 is a schematic view illustrating the convex portion of the solenoid molded body of a solenoid according to a second embodiment of the present invention.
FIG. 5 is a view illustrating a convex portion of a solenoid molded body of a solenoid according to a third embodiment of the present invention.
FIG. 6 is a view illustrating a convex portion of a solenoid molded body of a solenoid according to a fourth embodiment of the present invention.
FIG. 7 is a perspective view illustrating a solenoid molded body of a solenoid according to a fifth embodiment of the present invention.
FIG. 8 is a view illustrating a cross-section of a solenoid in the fifth embodiment.
FIG. 9 is a schematic view illustrating a convex portion of the solenoid molded body in the fifth embodiment.
FIG. 10 is a perspective view illustrating a solenoid molded body of a solenoid according to a sixth embodiment of the present invention.
FIG. 11 is a schematic view illustrating a screwed state between the solenoid molded body and a case in the sixth embodiment.

### {DESCRIPTION OF EMBODIMENTS}

Modes for carrying out a solenoid according to the present invention will be described below based on embodiments.

### {First embodiment}

A solenoid according to a first embodiment of the present invention will be described with reference to FIGS. 1 to 3.

A solenoid 1 according to this first embodiment will be described as a solenoid used in a solenoid valve V. Furthermore, the solenoid 1 is not limited to being used in the solenoid valve V, but may be used in a solenoid actuator that operates any load.

As illustrated in FIG. 1, for example, the solenoid valve V is used as an actuator in a hydraulically controlled device of a vehicle. Furthermore, the solenoid valve V is attached vertically to an attachment target device (not illustrated) and is used as a so-called oil-immersed solenoid valve that is immersed in hydraulic oil.

The solenoid valve V is configured by integrally attaching the solenoid 1 and a valve 2 for adjusting the flow rate of a fluid. Furthermore, FIG. 1 illustrates the solenoid valve V in an off state where no current is passed through a coil 39.

The valve 2 is composed of a sleeve 21, a valve body 22 which can come in contact with and separate from a valve hole (not illustrated) of the sleeve 21, and a coil-shaped spring 23 (not illustrated) that biases the valve body 22 in a direction away from the valve hole. Furthermore, the sleeve 21 and the valve body 22 are made of a material such as aluminum, iron, stainless steel, or resin.

The solenoid 1 is mainly composed of a solenoid case 30, a solenoid molded body 31, a fixed core 32, and a plunger 4 as a movable core.

The solenoid case 30 is formed in a cylindrical shape from a magnetic metal material such as iron. Furthermore, the solenoid case 30 is not limited to a cylindrical shape, but may be a tubular shape having a cross-section of another shape.

The solenoid case 30 has a through-hole 30a. This through-hole 30a is composed of an upper concave portion 30b, a lower concave portion 30c, and a stepped communication hole portion 30d that communicates between the upper concave portion 30b and the lower concave portion 30c.

The solenoid molded body 31 is disposed on the upper concave portion 30b. The valve 2 is disposed on the lower concave portion 30c. The fixed core 32 is disposed in the communication hole portion 30d. The valve body 22 is pressed against the fixed core 32 by the spring 23 in an off state of the solenoid valve V (see FIG. 1).

The solenoid molded body 31 is formed into a cylindrical shape with a bottom by molding a base material 36 and a coil 39 wound around a bobbin portion having a concave cross-section below the base material 36 with resin. The upper portion of the base material 36 forms a bottom portion, and a magnetic member 33 is inserted into a slit between the bottom portion and the bobbin portion around which the coil 39 is wound, and is integrated with the base material 36 by resin. Hereinafter, the resin portion on the outer periphery of the coil 39 will be referred to as a resin molded portion 35.

A lid member 38 is fitted over the solenoid molded body 31 to close the upper opening of the solenoid case 30. Electric power is supplied to the coil 39 of the solenoid molded body 31 from the outside through a power line embedded in the lid member 38.

The magnetic member 33 is an annular and flat-plate-shaped magnetic material made of a magnetic metal material such as iron, and forms a magnetic path between a second cylindrical body 8 and the solenoid case 30, which will be described later.

The fixed core 32 has a lower large-diameter portion 32a and an upper small-diameter portion 32b. A through-hole 32c extending in the axial direction is formed at the center portion of the fixed core 32.

The large-diameter portion 32a of the fixed core 32 is disposed on a lower large-diameter portion 30e of the communication hole portion 30d, and is sandwiched in the vertical direction by a bottom surface 30f of the large-diameter portion 30e and the sleeve 21.

A first cylindrical body 7 made of a non-magnetic material is disposed above a portion of the solenoid case 30 that defines the communication hole portion 30d. Further, the second cylindrical body 8 made of a magnetic material is disposed above the first cylindrical body 7.

The second cylindrical body 8 is a cylindrical body having a bottom opening downward. The solenoid case 30, the magnetic member 33, the second cylindrical body 8, the plunger 4, and the fixed core 32 form a magnetic path in this order.

The plunger 4 is formed in a cylindrical shape from a magnetic metal material such as iron. This plunger 4 is disposed in a space surrounded by the fixed core 32, the first cylindrical body 7, and the second cylindrical body 8 to be movable up and down.

A through-hole 4a which penetrates in the axial direction is formed at the center of the plunger 4. A rod 5 is fitted to this through-hole 4a. The rod 5 extends above and below the plunger 4.

An upper end 5a of the rod 5 is inserted through a bearing 9 fixed to the second cylindrical body 8. A lower end 5b of the rod 5 is inserted through the through-hole 32c of the fixed core 32. Further, a lower end surface of the rod 5 is in contact with the valve body 22.

When the coil 39 is energized, that is, when the solenoid valve V is turned on, a magnetic circuit is formed by the solenoid case 30, the fixed core 32, the plunger 4, the second cylindrical body 8, and the magnetic member 33. Accordingly, a magnetic force is generated between the fixed core 32 and the plunger 4 to move the plunger 4 downward and push the valve body 22 downward (not illustrated).

Next, the solenoid molded body 31 will be described in detail.

As illustrated in FIG. 1, the coil 39 of the solenoid molded body 31 is covered by the solenoid case 30 on the entire circumference thereof.

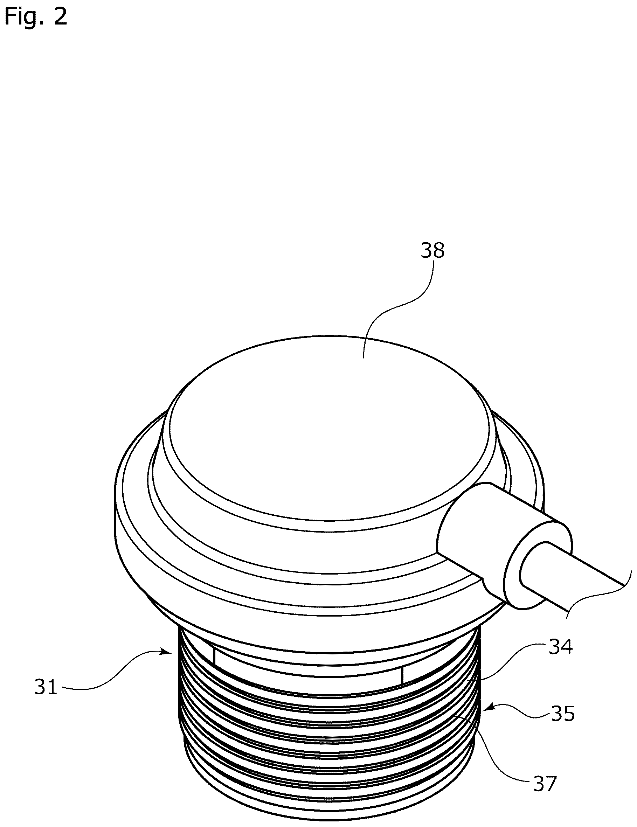

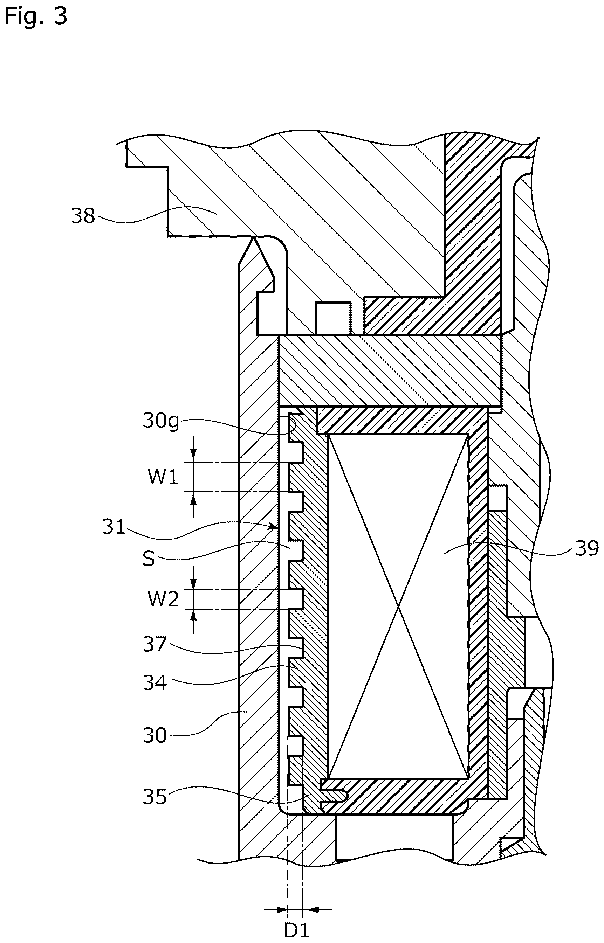

As illustrated in FIGS. 2 and 3, the outer peripheral surface of the resin molded portion 35 in a portion 31A of the solenoid molded body 31 has an uneven shape. That is, the plurality of convex portions 34 and concave portions 37 are provided alternately in the vertical direction on the outer peripheral surface of the resin molded portion 35 (in this embodiment, eight convex portions 34 and seven concave portions 37 are provided). The convex portion 34 and the concave portion 37 each have a substantially rectangular shape in cross-section view.

The surface area of the outer peripheral surface of the resin molded portion 35 is increased by the plurality of convex portions 34 and concave portions 37, and heat from the resin molded portion 35 is easily dissipated into the oil via the oil in contact with the outer peripheral surface. Heat is transferred from the oil to the solenoid case 30, and then transferred to the oil stored in the attachment target device outside the solenoid case 30. At this time, the oil that has received heat from the solenoid molded body 31 causes a convection current so that the heat is easily transferred to the solenoid case 30.

Further, the solenoid case 30 is made of a metal with better thermal conductivity than the solenoid molded body 31, so that heat transferred to the solenoid case 30 is easily transferred to the attachment target device to which the solenoid case 30 is attached. In this way, the dissipation of heat generated in the solenoid molded body 31 having the coil 39 during energization is improved. Accordingly, since an increase in resistance value of the coil 39 caused by the temperature rise can be reduced, the plunger 4 can be driven with a high thrust.

Further, the convex portion 34 and the concave portion 37 extend in an annular shape in the circumferential direction. Accordingly, since heat can be dissipated over a wide range in the circumferential direction, heat dissipation properties can be improved and temperature deviation in the circumferential direction of the coil 39 can be suppressed. Further, the temperature deviation in the circumferential direction can be further suppressed by allowing the oil to flow in the circumferential direction.

Further, since the plurality of the convex portions 34 and the concave portions 37 are provided alternately in the axial direction, that is, in the vertical direction and heat can be dissipated over a wide range in the vertical direction, heat dissipation properties are improved. Further, since heat can be dissipated in a more balanced manner in the vertical direction than in a resin molded portion with a flat outer peripheral surface, the temperature deviation in the vertical direction of the coil 39 can be suppressed.

Further, since the convex portions 34 are disposed at equal intervals in the vertical direction, the temperature deviation in the vertical direction of the coil 39 can be more effectively suppressed.

Further, the vertical width W1 of the convex portion 34 is larger than the vertical width W2 of the concave portion 37 (W1>W2). Accordingly, since heat can be easily dissipated to the outer radial side of the convex portion 34 while ensuring the strength of the resin molded portion 35, heat can be dissipated effectively.

Further, the depth D1 of the concave portion 37 is smaller than the vertical width W2 of the concave portion 37 (D1<W2). Accordingly, the strength of the convex portion 34 can be ensured, and the coil 39 and the solenoid case 30 can be brought closer to each other.

Further, since the convex portion 34 and the concave portion 37 have a rectangular cross-section, the strength of the convex portions 34 can be ensured and the surface area can be efficiently increased. Further, the radial dimension of the resin molded portion 35 can be reduced, and the solenoid 1 can be made smaller.

Furthermore, in this embodiment, the resin molded portion 35 having the convex portion 34 is formed by injection molding, but the present invention is not limited thereto. For example, after a resin layer is formed on the coil, the resin layer may be cut to form the convex portion and the concave portion, or the convex portion may be laminated on the resin layer to form the convex portion.

Further, as illustrated in FIG. 3, each convex portion 34 is radially away from an inner peripheral surface 30g of the solenoid case 30. Oil exists in a radial gap S between the solenoid case 30 and the solenoid molded body 31. Accordingly, since a convection current is caused by heat generated in the coil 39 during energization, heat is easily transferred from the solenoid molded body 31 to the solenoid case 30 to promote heat dissipation.

Further, oil moves in the radial gap S between the solenoid case 30 and the solenoid molded body 31 as the plunger 4 is driven. Accordingly, since oil at a relatively low temperature is supplied to the outer peripheral surfaces of the convex portions 34 and the inside of the concave portions 37, heat dissipation properties are improved.

Furthermore, in this embodiment, although a form has been exemplified in which the convex portion 34 has an annular shape, for example, the convex portion may have a C-shape, a plurality of the convex portions may be arranged at intervals in the circumferential direction, or the convex portions adjacent to each other in the axial direction may be partially connected to each other in the axial direction. Further, in this embodiment, although a form has been exemplified in which the convex portion 34 and the concave portion 37 have a rectangular cross-section, the cross-sectional shape may be different.

Further, in this embodiment, although a form has been exemplified in which the fluid inside the solenoid case 30 is oil, the present invention is not limited thereto, and the fluid may be a liquid other than oil, a gas, a gas-liquid mixture, or the like.

Further, in this embodiment, although a form has been exemplified in which the fluid outside the solenoid case 30, that is, inside the attachment target device is oil, the present invention is not limited thereto, and the fluid may be a liquid other than oil, a gas, a gas-liquid mixture, or the like. Further, the fluid inside and outside the solenoid case 30 may be different fluids.

### {Second embodiment}

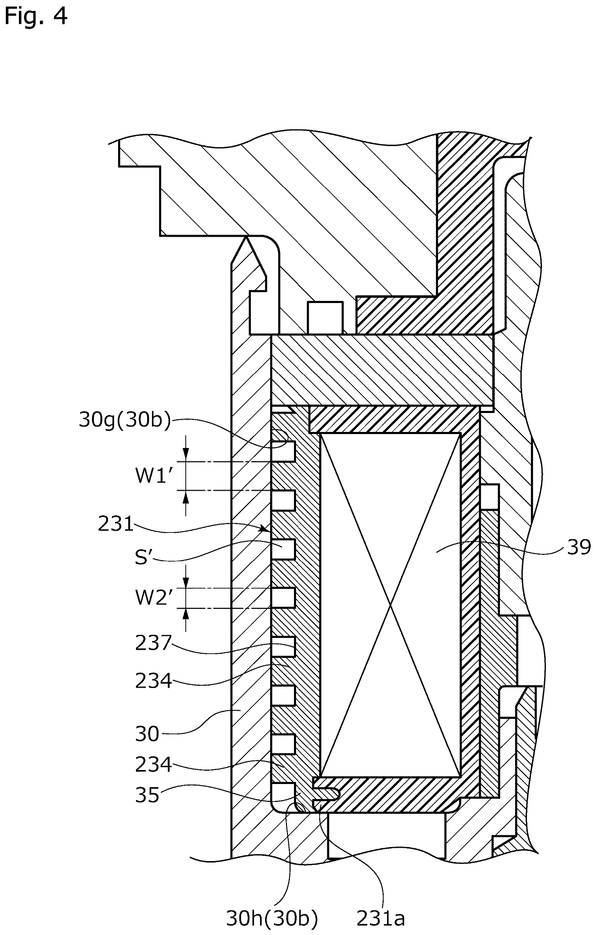

Next, a solenoid according to a second embodiment of the present invention will be described with reference to FIG. 4. Furthermore, the description of the same and overlapping configuration with the first embodiment will be omitted.

As illustrated in FIG. 4, in a solenoid molded body 231 in this second embodiment, a convex portion 234 is in contact with the inner peripheral surface 30g of the solenoid case 30.

Accordingly, since the convex portion 234 is in contact with the solenoid case 30 made of metal with high thermal conductivity, heat from the coil 39 can be dissipated efficiently. Further, the heat of the coil 39 can be transferred evenly in a balanced manner in the vertical direction of the solenoid case 30 via the plurality of convex portions 234 in the vertical direction.

Further, since the vertical width W1' of the convex portion 234 is larger than the vertical width W2' of the concave portion 237, the heat of the coil 39 can be easily transferred to the solenoid case 30 and can be dissipated effectively.

Further, since a convection current is caused in the oil existing in a space S' surrounded by the concave portion 237 and the solenoid case 30 due to the heat generated in the coil 39 during energization, heat dissipation is promoted.

Further, since the convex portion 234 and the concave portion 237 have a rectangular cross-section, the strength of the convex portion 234 can be ensured, and damage to the convex portion 234 when the solenoid molded body 231 is inserted into the solenoid case 30 can be prevented.

Further, since a lower end surface 231a of the solenoid molded body 231 is in contact with a bottom surface 30h of the upper concave portion 30b of the solenoid case 30 and the convex portion 234 of the lower end of the solenoid molded body 231 is in contact with the inner peripheral surface 30g of the solenoid case 30, the solenoid case 30 and the solenoid molded body 231 are unlikely to tilt relative to each other, and the position of the solenoid molded body 231 relative to the solenoid case 30 is stable.

### {Third embodiment}

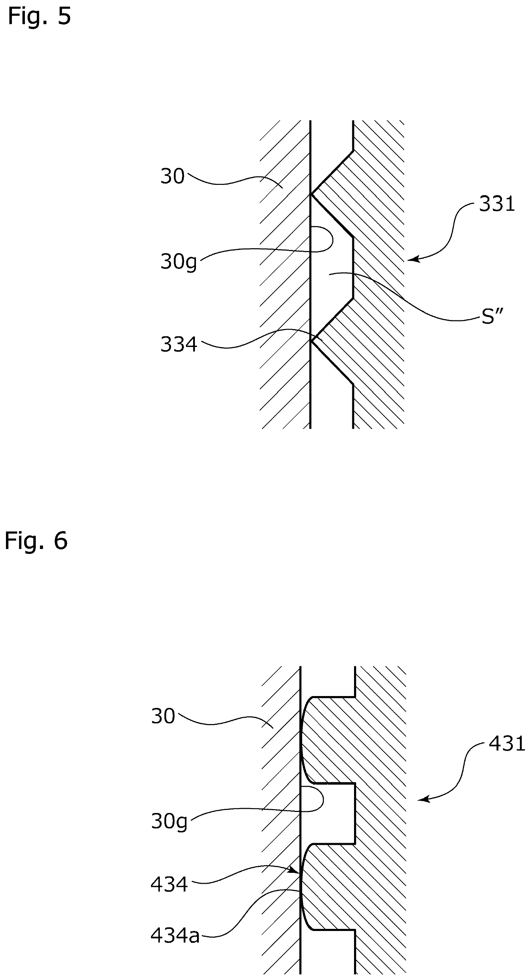

Next, a solenoid according to a third embodiment of the present invention will be described with reference to FIG. 5. Furthermore, the description of the same and overlapping configuration with the second embodiment will be omitted.

As illustrated in FIG. 5, in a solenoid molded body 331 of the solenoid according to the third embodiment, a convex portion 334 has a substantially triangular cross-section. Accordingly, since the contact area between the convex portion 334 and the inner peripheral surface 30g of the solenoid case 30 can be reduced, the solenoid molded body 331 can be easily inserted into the solenoid case 30.

Further, since a large space S" between the convex portions 334 can be ensured, the oil remaining in the space S" is less likely to become hot.

Furthermore, although a form has been exemplified in which the convex portions 334 are away from each other in the axial direction, the inclined surfaces of the convex portions adjacent to each other in the axial direction may be connected in the axial direction. For example, the outer peripheral surface of the resin molded portion may be wavy, such as a triangular wave or a sine wave.

### {Fourth embodiment}

Next, a solenoid according to a fourth embodiment of the present invention will be described with reference to FIG. 6. Furthermore, the description of the same and overlapping configuration with the second embodiment will be omitted.

As illustrated in FIG. 6, in a solenoid molded body 431 of the solenoid according to the fourth embodiment, an outer peripheral surface 434a of a convex portion 434 has an arc-shaped cross-section that protrudes radially outward. Accordingly, since the corner portion of the convex portion 434 does not contact the inner peripheral surface 30g of the solenoid case 30, the solenoid molded body 431 is easily inserted into the solenoid case 30. Furthermore, when the solenoid molded body 431 is inserted, the convex portion 434 is less likely to be damaged.

Furthermore, in this fourth embodiment, although a form has been exemplified in which the outer peripheral surface 434a of the convex portion 434 has an arc shape, for example, the corner portion of the convex portion may be chamfered and the outer peripheral surface of the corner portion may be made flat. Furthermore, the chamfering is not limited to a curved surface, but may be a straight surface.

### {Fifth embodiment}

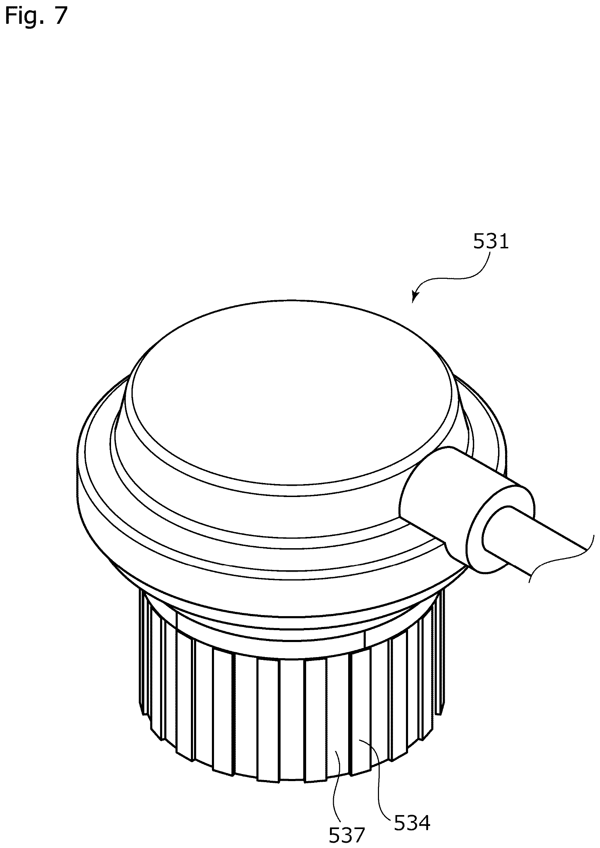

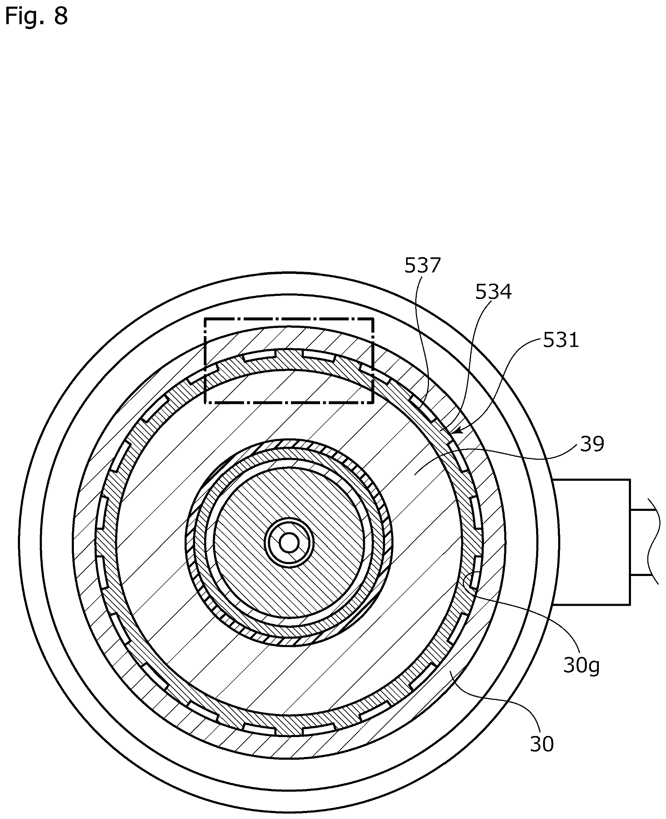

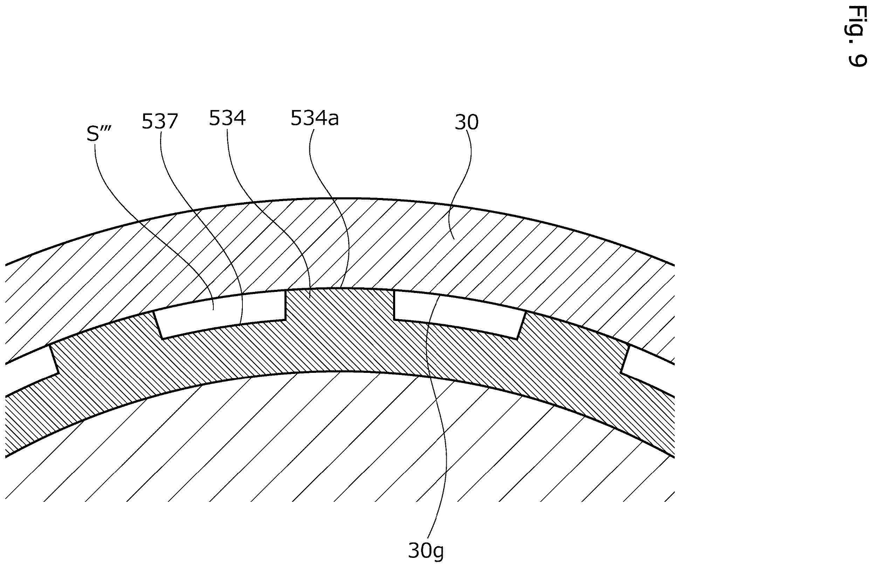

Next, a solenoid according to a fifth embodiment of the present invention will be described with reference to FIGS. 7 to 9. Furthermore, the description of the same and overlapping configuration with the first embodiment will be omitted.

As illustrated in FIGS. 7 to 9, a convex portion 534 and a concave portion 537 of a solenoid molded body 531 have a substantially rectangular cross-section and extend in the axial direction. The convex portion 534 and the concave portion 537 allow heat to be dissipated over a wide range in the axial direction.

Further, since the convex portion 534 extends in the axial direction, it is easier to insert the convex portion into the solenoid case 30 than those extending in the circumferential direction, that is, the first to fourth embodiments. Furthermore, from the viewpoint of ease of insertion, it is preferable that the corners of the insertion end, that is, the lower end of the convex portion 534 be chamfered.

Further, since the plurality of convex portions 534 and concave portions 537 are provided in the circumferential direction and heat can be dissipated over a wide range in the circumferential direction, heat dissipation is improved. Further, since heat can be dissipated in a more balanced manner in the circumferential direction than in a resin molded portion having a flat outer peripheral surface, the temperature deviation in the circumferential direction of the coil 39 can be suppressed.

Further, the convex portion 534 has an outer peripheral surface 534a that extends in parallel to the inner peripheral surface 30g of the solenoid case 30 and has an arc-shaped cross-section. Since the outer peripheral surface 534a of the convex portion 534 is in contact with the inner peripheral surface 30g of the solenoid case 30, heat from the coil 39 can be dissipated efficiently and the localized temperature distribution in the axial direction is less likely to occur.

Further, since the oil causes a convection current in the axial direction in a space S‴ inside the concave portion 537, the temperature deviation in the axial direction can be further suppressed.

Further, the oil moves in the space S‴ inside the concave portion 537 as the plunger 4 is driven. Accordingly, since the relatively low-temperature oil is supplied to the space S''', heat dissipation properties are improved.

In this way, since the solenoid molded body 531 of this embodiment can disperse the temperature in the axial direction, it is effective for the solenoid molded body 531, which is more susceptible to the temperature deviation in the axial direction than in the circumferential direction.

Furthermore, in this fifth embodiment, although a form has been exemplified in which the convex portion 534 is in contact with the inner peripheral surface 30g of the solenoid case 30, the convex portion may be radially away from the inner peripheral surface as in the first embodiment.

Further, the cross-sectional shapes of the convex portions of the third and fourth embodiments may be applied to this fifth embodiment.

Further, in this embodiment, the convex portion 534 continuously extends in the axial direction, but the plurality of convex portions may be arranged at intervals in the axial direction. Further, in this case, the convex portions may be arranged to be shifted in the circumferential direction. Further, in the convex portions 534, the convex portions adjacent to each other in the circumferential direction may be partially connected in the circumferential direction.

### {Sixth embodiment}

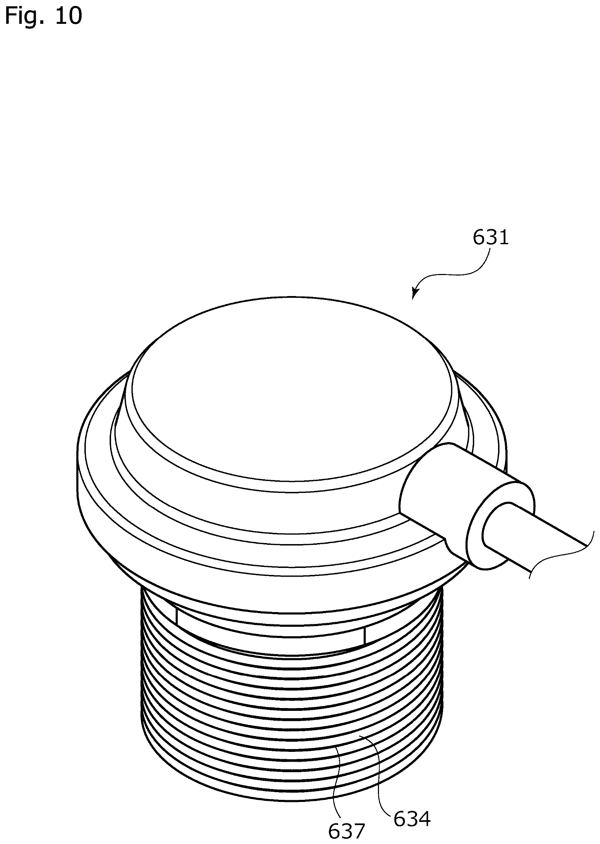

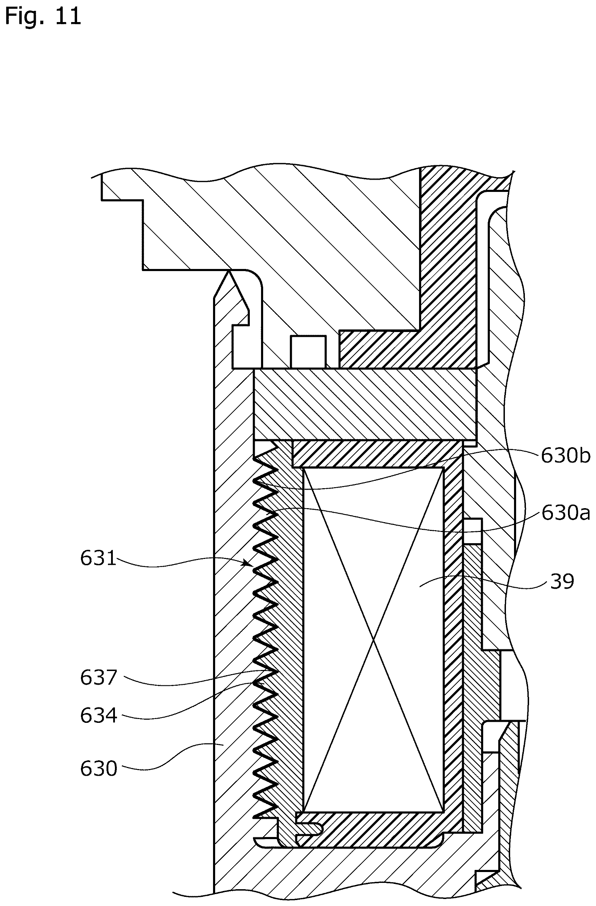

Next, a solenoid according to a sixth embodiment of the present invention will be described with reference to FIGS. 10 and 11. Furthermore, the description of the same and overlapping configuration with the first embodiment will be omitted.

As illustrated in FIG. 10, a convex portion 634 and a concave portion 637 of a solenoid molded body 631 have a substantially triangular cross-section, extend in a spiral shape having a circumferential component and an axial component, and form a so-called male screw.

Further, as illustrated in FIG. 11, a convex portion 630a and a concave portion 630b having a substantially triangular cross-section and extending in a spiral shape having a circumferential component and an axial component are formed on an inner peripheral surface of a solenoid case 630 and form a so-called female screw.

The solenoid molded body 631 is connected to the solenoid case 630 by screwing the convex portion 634 and the concave portion 637 into the convex portion 630a and the concave portion 630b.

Accordingly, since the convex portion 634 and the concave portion 637 of the solenoid molded body 631 come into contact with the convex portion 630a and the concave portion 630b of the solenoid case 630 over a wide range, heat from the coil 39 can be dissipated efficiently, the solenoid case 630 and the solenoid molded body 631 are unlikely to tilt relative to each other, and the position of the solenoid molded body 631 relative to the solenoid case 630 is stable.

Although the embodiments of the present invention have been described above with reference to the drawings, the specific configuration is not limited to these embodiments, and the present invention also includes modifications and additions that do not deviate from the scope of the present invention.

For example, a form has been described in which the convex portion has an annular shape and extends in the radial direction in the first to fourth embodiments, a form has been described in which the convex portion extends in the axial direction in the fifth embodiment, and a form has been described in which the convex portion extends in a spiral shape in the sixth embodiment. However, the convex portion may be divided into a plurality of parts in the extending direction. Further, the convex portions may not extend, but may be scattered on the outer peripheral surface of the resin molded portion.

Further, in the first to sixth embodiments, although a form has been exemplified in which the plurality of convex portions are provided, at least one convex portion may be provided.

Further, in the first to sixth embodiments, although a form has been exemplified in which the magnetic member and the coil are integrally molded with each other, the magnetic member and the coil may be separated from each other.

Further, in the first to sixth embodiments, although a form of an oil-immersed solenoid valve has been exemplified, the environment in which the solenoid valve is installed can be freely changed to water, gas, air, or the like.

Further, in the first to sixth embodiments, although an example has been described in which the resin molded portion is provided only on the outer radial side of the coil, the resin molded portion may also be provided on the upper and lower sides in addition to the outer radial side of the coil, and may also be provided on the inner radial side.

### {REFERENCE SIGNS LIST}

- 1: Solenoid
- 4: Plunger (movable core)
- 30: Solenoid case (case)
- 30g: Inner peripheral surface
- 31: Solenoid molded body
- 32: Fixed core
- 34: Convex portion
- 35: Resin molded portion
- 37: Concave portion
- 39: Coil
- V: Solenoid valve

## Claims

1. A solenoid, comprising:
a case formed in a cylindrical shape; and
a coil disposed inside the case and has an outer periphery portion covered by a resin molded portion,
wherein at least a part of an outer peripheral surface of the resin molded portion is formed in an uneven shape having at least one convex portion.

2. The solenoid according to claim 1,
wherein the convex portion extends in a circumferential direction.

3. The solenoid according to claim 2,
wherein the convex portion extends over an entire circumference.

4. The solenoid according to claim 3,
wherein a plurality of the convex portions are provided in an axial direction.

5. The solenoid according to claim 1,
wherein the convex portion extends in an axial direction.

6. The solenoid according to claim 5,
wherein a plurality of the convex portions are provided in a circumferential direction.

7. The solenoid according to claim 1,
wherein the convex portion is radially away from the case.

8. The solenoid according to claim 1,
wherein the convex portion is brought into contact with the case.

9. The solenoid according to claim 8,
wherein the uneven shape of the outer peripheral surface of the resin molded portion extends in a spiral shape, and an inner peripheral surface of the case has an uneven shape which is engageable with the uneven shape of the outer peripheral surface of the resin molded portion.

10. The solenoid according to any one of claims 1 to 8,
wherein the uneven shape is composed of concave shapes and convex shapes alternatively arranged and each having a rectangular cross-section.
